# EUROPÄISCHE PATENTSCHRIFT

(11) **EP 1 108 297 B1**
(45) Veröffentlichungstag und Bekanntmachung des Hinweises auf die Patenterteilung: **02.07.2003**
(21) Anmeldenummer: 99968273.5
(22) Anmeldetag: 24.08.1999
(51) Int. Cl.: H04B 17/00

(54) **VERFAHREN UND VORRICHTUNG ZUR MESSUNG DER ÜBERTRAGUNGSQUALITÄT EINES ÜBERTRAGUNGSKANALS**
METHOD AND DEVICE FOR MEASURING THE TRANSMISSION QUALITY OF A TRANSMISSION CHANNEL
PROCEDE ET DISPOSITIF DE MESURE DE LA QUALITE DE TRANSFERT D'UNE VOIE DE TRANSMISSION

(30) Priorität: 28.08.1998 DE 19839307
(43) Veröffentlichungstag der Anmeldung: 20.06.2001
(73) Patentinhaber: SIEMENS AKTIENGESELLSCHAFT, 80333 München (DE)
(72) Erfinder: EICHINGER, Josef, D-85464 Neufinsing (DE); HALFMANN, Rüdiger, D-67697 Otterberg (DE); LIEGL, Werner, D-85247 Schwabhausen (DE)
(86) Internationale Anmeldenummer: EP9906209
(87) Internationale Veröffentlichungsnummer: WO00013348

(56) Entgegenhaltungen:
- EP-A- 0 296 822
- WO-A-94/28623
- WO-A-94/28637

## Beschreibung

Die Erfindung betrifft ein Verfahren und eine entsprechende Vorrichtung zur Messung der Übertragungsqualität bei einer Übertragung digitaler Information über einen Übertragungskanal.

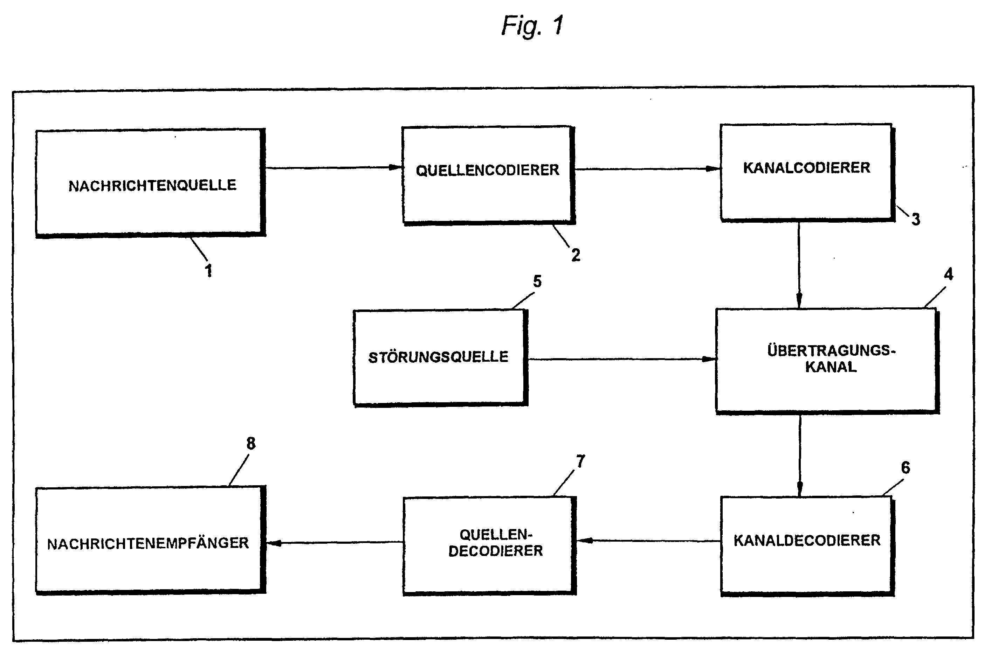

Der Bedarf an digitalen Übertragungssystemen ist in den letzten Jahrzehnten sprunghaft angestiegen. Digitale Übertragungssysteme werden allgemein in die in Fig. 1 gezeigten Funktionseinheiten gegliedert. Eine Nachrichtenquelle 1 erzeugt Information, die von einem Sender über einen Übertragungskanal 4 zu einem Empfänger übertragen wird. Die Eigenschaften der zu übertragenden Information hängen von der Nachrichtenquelle ab. Zu übertragende Nachrichten können zum Beispiel ein Audiosignal oder ein Videosignal sein. Dabei übertragen analoge Übertragungssysteme analoge Signale, die von analogen Nachrichtenquellen erzeugt wurden, direkt über den Übertragungkanal unter Verwendung herkömmlicher analoger Modulationsverfahren. Solche Modulationsverfahren sind z.B. die Amplitudenmodulation, die Frequenzmodulation oder die Phasenmodulation. In digitalen Übertragungssystemen wird die zu übertragende Information in eine Folge binärer Ziffern umgewandelt. Um die Kapazität des Kanals möglichst gut
ausnutzen zu können, sollte die zu übertragende Nachricht mit so wenig binären Ziffern wie nötig dargestellt werden. Zu diesem Zweck wird ein Quellencodierer verwendet, der die Aufgabe hat, die zu übertragenden Nachrichten in Folgen von Signalwerten umzusetzen und zu codieren, so daß sie der Kanal übertragen kann. Dabei versucht der Quellencodierer die zu übertragenden Nachrichten möglichst effizient in binäre Ziffern umzuwandeln.

Die Folge der von dem Quellencodierer erzeugten binären Ziffern wird von dem Kanal zu dem Empfänger übertragen. Ein solcher tatsächlicher Kanal kann beispielsweise aus einer Leitungsverbindung, einem Koaxialkabel, einem Lichtwellenleiter (LWL), einer Funkverbindung, einem Satellitenkanal oder einer Kombination dieser Übertragungsmedien bestehen. Solche Kanäle können nicht direkt die Folge binärer Ziffern von dem Sender übertragen. Dazu muß die Folge digitaler Information in Signalwerte umgesetzt werden, die den Eigenschaften des Kanals entsprechen. Eine solche Einrichtung wird digitaler Modulator genannt. Ein solcher Modulator ist Teil des Kanalcodierers 3, der zusätzlich einen diskreten Kanalcodierer umfaßt, um die zu übertragende Information mit einem dem Kanal angepaßten Fehlerschutz zu versehen.

Von dem Übertragungskanal 4 wird nicht vorausgesetzt, daß er fehlerfrei arbeitet, sondern es wird angenommen, daß eine Störungsquelle 5 mit einer bestimmten Wahrscheinlichkeit die übertragenen Signale während der Übertragung verändert.

Solche Störungen können beispielsweise ein Übersprechen von Signalen sein, die auf benachbarten Kanälen übertragen werden. Die Störungen können ebenso durch thermisches Rauschen hervorgerufen werden, das in den elektronischen Schaltungen, wie z.B. Verstärkern und Filtern, erzeugt wird, die in dem Sender und dem Empfänger verwendet werden. Bei Leitungsverbindungen können Störungen zusätzlich durch Umschaltungen verursacht werden und bei Funk- oder Satellitenverbindungen durch Wettereinflüsse, wie beispielsweise Gewitter, Hagel oder Schnee. Solche Einflüsse verändern das übertragene Signal und verursachen Fehler in der empfangenen digitalen Signalfolge.

Um trotzdem eine relativ zuverlässige Übertragung zu gewährleisten, erhöht der Kanalcodierer die Redundanz der zu übertragenden (binären) Sequenz. Mit Hilfe dieser vom Sender hinzugefügten Redundanz wird der Empfänger bei der Dekodierung der informationstragenden Signalfolge unterstützt. Zu diesem Zweck wird beispielsweise vom Kanalcodierer eine bestimmte Anzahl von Signalen zu Blöcken zusammengefaßt und eine Anzahl von Kontrollsignalen (im einfachsten Fall ein Paritätsbit) hinzugefügt. Auf diese Weise werden immer gleichzeitig k-Informationsbit codiert, wobei jede k-Bit-Sequenz einer eindeutigen n-Bit-Sequenz, dem sogenannten Codewort, zugeordnet wird. Die auf diese Weise hinzugefügte Redundanz läßt sich durch das Verhältnis n/k angeben. Dies entspricht ebenso der Kanalbandbreite, die entsprechend erhöht werden muß, um die um die hinzugefügte Redundanz erweiterte Informationssequenz zu übertragen.

Alternativ kann eine erhöhte Zuverlässigkeit gegenüber Kanalstörungen, z.B. auch durch eine Erhöhung der Sendeleistung erreicht werden. Da die Erhöhung der Sendeleistung jedoch relativ teuer ist, wird in der Regel, bei verfügbarer Bandbreite, die Zuverlässigkeit durch die Erhöhung der erforderlichen Kanalbandbreite erzielt.

Bei der Übertragung von immer einem Bit mit der Datenrate R bit/s ordnet der Modulator der binären Ziffer 0 einen Signalverlauf bzw. einen Signalwert (im folgenden nur als Signalwert bezeichnet) s₁ (t) zu und der binären Ziffer 1 einen Signalwert s₂ (t). Diese Übertragung jedes einzelnen Bits durch den Kanalcodierer wird binäre Modulation genannt. Alternativ kann der Modulator k Informationsbit gleichzeitig unter Verwendung von M = 2^{k} unterschiedlichen Signalwerten sᵢ (t) mit i = 1, 2, ... M übertragen, wobei jeder der 2^{k} möglichen k-Bit-Sequenzen einem Signalwert zugeordnet wird.

Auf der Empfängerseite eines digitalen Übertragungssystems verarbeitet der digitale Demodulator den im Kanal (ev. verändert) übertragenen Signalwert und ordnet jedem Signalwert eine einzelne Zahl zu, die eine Schätzung des übertragenen Datensymbols (z.B. binär) darstellt.

Nach Empfang eines Signals im Empfänger muß der Demodulator entscheiden, welcher der M möglichen Signalwerte gesendet wurde. Diese Entscheidung wird in einem Entscheider (Slicer) durchgeführt, wobei die Entscheidung mit minimaler Fehlerwahrscheinlichkeit getroffen werden sollte. Dieser Entscheider ordnet einen (meist aufbereiteten) Empfangswert einem der M möglichen Symbolwerte zu.

Wenn beispielsweise eine binäre Modulation verwendet wird, muß der Demodulator bei der Verarbeitung jedes empfangenen Signals entscheiden, ob es sich bei dem übertragenen Bit um eine Null oder eine Eins handelt. In diesem Fall führt der Demodulator eine binäre Entscheidung aus. Alternativ kann der Demodulator auch eine ternäre Entscheidung ausführen, wobei sich der Demodulator für "Null", "Eins" oder "keine Entscheidung" in Abhängigkeit von der Qualität des empfangenen Signals entscheidet.

Der Entscheidungsprozeß eines Demodulators kann als Quantisierung angesehen werden, bei der binäre und ternäre Entscheidungen Spezialfälle einer Demodulation sind, die Q-Pegel quantisiert, wobei Q ≥ 2 ist. Im allgemeinen verwenden digitale Kommunikationssysteme eine höhenwertige Modulation, wobei m = 0,1 ... M-1 die M-möglichen übertragenen Symbole darstellt.

Wenn die übertragene Information keine Redundanz enthält, muß der Demodulator in jedem vorgegebenen Zeitintervall entscheiden, welcher der M-Signalwerte übertragen wurde. Enthält die übertragene Information dagegen Redundanz, so rekonstruiert der Demodulator die ursprüngliche Informationssequenz aufgrund des vom Kanalcodierer verwendeten Codes und der Redundanz der empfangenen Daten. Je nach den von den Anwendungen bestimmten Anforderungen erzeugt der Kanalcodierer Signalblöcke, die es dem Kanaldecodierer ermöglichen, entweder nur festzustellen, ob bestimmte Störungen aufgetreten sind (fehlererkennende Codierung) oder sogar durch Störungen verursachte Fehler (bis zu einer bestimmten Maximalzahl pro Signalblock) automatisch zu korrigieren (fehlerkorrigierende Codierung).

Ein Maß für die Zuverlässigkeit, mit der vom Sender zum Empfänger Nachrichten übertragen werden, stellt die Fehlerrate dar. Die Fehlerrate gibt an, mit welcher durchschnittlichen Wahrscheinlichkeit ein Bitfehler am Ausgang des Decoders auftritt. Die Bitfehlerrate (Bit Error Rate) gibt die Anzahl der am Empfänger auftretenden Fehlerbits geteilt durch die Gesamtzahl der empfangenen Bits pro Zeiteinheit an. Die Bitfehlerrate (oder Symbolfehlerrate wenn die Fehlerhäufigkeit von Symbolen beurteilt wird)ist das wichtigste Qualitätskriterium eines digitalen Übertragungssystems. Im allgemeinen hängt die Fehlerwahrscheinlichkeit von den Codeeigenschaften, der Art der zur Übertragung der Information über den Kanal verwendeten Signalwerte, der Sendeleistung, den Eigenschaften des Kanals, d.h., der Stärke des Rauschens, der Art der Störungen, usw., und dem Demodulations- und Decodierungsverfahren ab. Die Bedeutung der Bitfehlerrate für digitale Übertragungssysteme entspricht der des Signal-Rausch-Verhältnisses (SNR) analoger Übertragungssysteme.

Herkömmlich wird zur Ermittlung der Fehlerrate in periodischen Zeitabständen eine bekannte Bit- bzw. Symbolsequenz zusätzlich zu der übertragenen Information übertragen, die auch dem Empfänger bekannt ist. Ein solches Signal besteht im allgemeinen aus einer Pseudozufallsfolge geeigneter Länge. Im Empfänger kann die Fehlerrate dadurch ermittelt werden, daß ein Vergleich des gesendeten Signals mit dem empfangenen Signal durchgeführt wird (Soll-Ist-Vergleich).

Aufgabe der Erfindung ist es, ein verbessertes Verfahren und eine verbesserte Vorrichtung zur Messung der Übertragungsqualität eines digitalen Übertragungskanals zu schaffen.

Diese Aufgabe wird für ein Verfahren mit der technischen Lehre des Anspruchs 1 und für eine Vorrichtung mit der technischen Lehre des Anspruchs 7 gelöst.

Vorteilhafte Ausgestaltungen der Erfindung sind in den Unteransprüchen angegeben.

Erfindungsgemäß wird im Demodulator auf der Empfängerseite jedem detektierten Symbol wieder ein Signalwert zugeordnet, den der Eingang des Entscheiders im Demodulator empfangen hätte, wenn der dem detektierten Symbol entsprechende Signalverlauf bzw. Signalwert unverfälscht übertragen worden wäre. Auf diese Weise wird ein den detektierten Symbolwerten entsprechendes hypothetisches Eingangssignal gebildet, das keine Signalwerte mit Kanalverzerungen enthält. Dieses Referenzsignal entspricht - solange der Entscheider keine falschen Symbole detektiert - somit dem ursprünglichen Signal auf der Sendeseite. Durch Subtraktion dieses Referenzsignals vom tatsächlich empfangenen Signal läßt sich das Störsignal gewinnen. Mit Hilfe dieser beiden Signalanteile läßt sich die Qualität des Übertragungskanals bestimmen. Die mittlere Leistung dieses so gebildeten Referenzsignals entspricht der mittleren Leistung des empfangenen, ungestörten Signalanteils. Die mittlere Leistung des empfangenen Signals entspricht der Kombination von gestörtem und ungestörtem Signalanteil. Aus diesem wird mit Hilfe des zuvor berechneten ungestörten Signalanteils, dem Referenzsignal, die Störleistung berechnet. Aus dem Verhältnis der mittleren Leistung des ungestörten Signalanteils zu der mittleren Leistung des Störanteils ergibt sich der Signal-Stör-Abstand (SNR) als ein Maß für die Übertragungsqualität des Übertragungskanals.

Mit dieser Erfindung wird insbesondere vermieden, daß dem Empfänger eine bestimmte Sendefolge bekannt sein muß, wie es bei herkömmlichen Verfahren notwendig ist. Zudem erfolgt die Ermittlung der Fehlerrate parallel zur Auswertung der übertragenen Symbole, also "online". Für die fortlaufende Messung der Übertragungsqualität ist daher eine periodische Einstreuung einer Meßsequenz in den zu übertragenden Datenstrom nicht mehr erforderlich. Auf diese Weise kann eine Reduktion der Nettodatenrate des Übertragungskanals vermieden werden.

Zur Gewährleistung einer großen statistischen Sicherheit muß das herkömmliche Verfahren, das eine dem Sender und Empfänger bekannte Testsequenz verwendet, eine große Anzahl von Fehlern erfassen, in der Regel einige Hundert. Für die im allgemeinen geforderten, sehr niedrigen Bitfehlerraten von beispielsweise 10⁻⁹ benötigen die herkömmlichen Verfahren sehr lange Meßzeiten, um eine entsprechende Anzahl von Fehlern zu detektieren. Dem erfindungsgemäßen Verfahren liegt dagegen die Auswertung des gemessenen Signal-Stör-Abstandes während der laufenden Übertragung zugrunde. Da für die Auswertung der mittleren Leistungen jedoch wesentlich kürzere Meßzeiten erforderlich sind als für die vergleichbare Auswertung des Symbol- bzw. Bitstromes der Testsequenzen läßt sich mit dem erfindungsgemäßen Verfahren sehr viel schneller die Übertragungsqualität bestimmen.

Die Erfindung ermöglicht damit eine Überwachung der tatsächlichen Fehlerrate in deutlich kürzeren Zeitabständen, da herkömmlich nicht die tatsächlich übertragene Information zur Bestimmung der Fehlerrate verwendet werden kann und somit das Auftreten von Übertragungsfehlern in den nur selten eingestreuten Testsequenzen abgewartet werden muß.

In einer weiteren Ausgestaltung der Erfindung kann die ermittelte Übergangsqualität, der Signal-Stör-Abstand (SNR), in Abhängigkeit von dem jeweils verwendeten Codierverfahren in eine Symbol- bzw. Bitfehlerrate umgesetzt werden.

Bevorzugte Ausführungsbeispiele der Erfindung werden nachstehend anhand der Zeichnung erläutert. Es zeigen:
Fig. 1 den allgemeinen Aufbau eines Nachrichtenübertragungssystems,
Fig. 2 den Aufbau eines erfindungsgemäßen Empfängers,
Fig. 3 den Aufbau eines erfindungsgemäßen Demodulators des in Fig. 2 gezeigten Empfängers,
Fig. 4 den Aufbau von Einrichtungen zur Bestimmung der Übertragungsqualität des Übertragungskanals in dem in Fig. 2 gezeigten Empfänger,
Fig. 5 eine Einrichtung zur Zuordnung einer ermittelten Übertragungsqualität zu einer Fehlerrate in einem in Fig. 2 gezeigten Empfänger und
Fig. 6 ein Kennliniendiagramm für die Zuordnung eines Signal-Stör-Abstandes zu der Wahrscheinlichkeit für einen Symbolfehler in Abhängigkeit von dem verwendeten Modulationsverfahren.

Bei der digitalen Informationsübertragung werden Informationen zwischen einer Nachrichtenquelle (Sender) und einem Empfänger über ein Übertragungsmedium übertragen. Eine solche Vorrichtung, die sich zwischen dem Sender und dem Empfänger befindet, wird im allgemeinen als Kanal bezeichnet.

Für die Übertragung werden die zu übertragenden Daten in Codeworte umgewandelt, die den Übertragungseigenschaften des Nachrichtenkanals angepaßt sind, um die zu übertragenden Daten u.a. gegen Übertragungsfehler zu sichern.

Bei der Übertragung wird im Sender mittels einer umkehrbar eindeutigen funktionalen Zuordnung einer Bitsequenz ein Zeichen, das im allgemeinen als Symbol im Signalraum oder Kanalsymbol bezeichnet wird, zugeordnet. Dieses Symbol wird anschließend auf einen diesem Symbol zugeordneten Signalverlauf (im folgenden als Signalwert bezeichnet) abgebildet. Die funktionale Zuordnung eines Symbols zu einer Bitsequenz im Sender wird Codierung oder auch Mapping genannt, die Abbildung eines solchen Symbols oder mehrerer solcher Symbole auf einen Signalwert wird Modulation genannt.

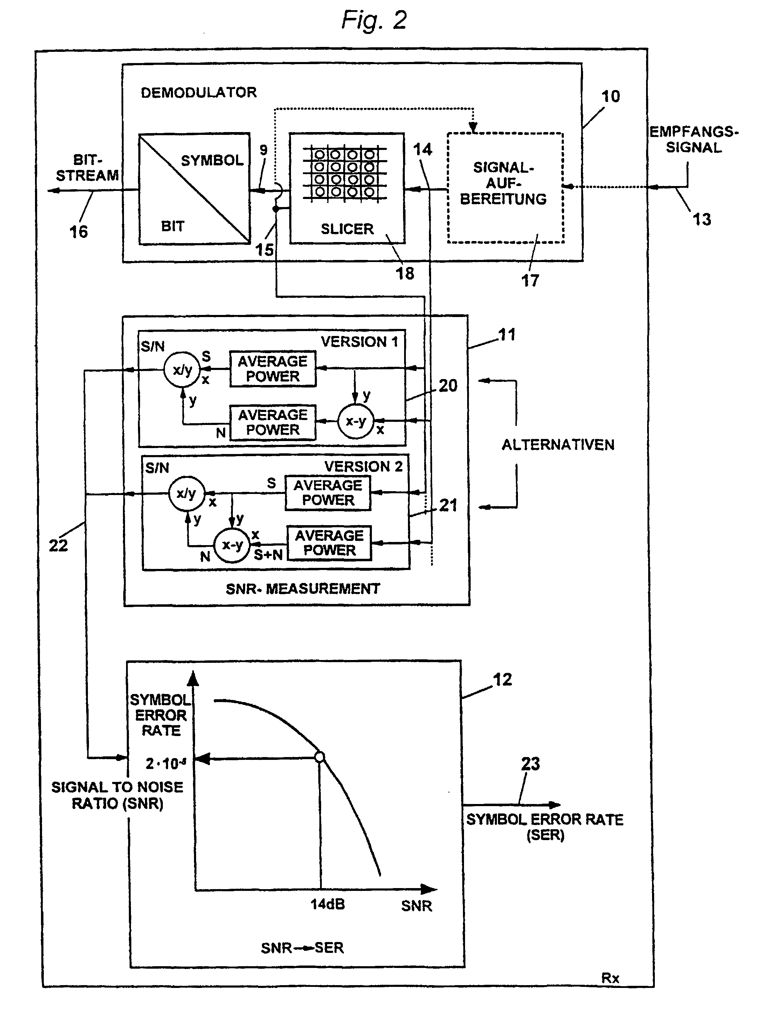

Die Umkehrung dieser Abbildungsreihenfolge findet im Empfänger statt. Während die Demodulation, d.h. die Zuordnung eines Empfangssignals zu einem Symbol aufgrund von Verzerrungen oder überlagerten Störungen des Kanals in der Regel nicht fehlerfrei durchgeführt werden kann, bereitet die Decodierung, d.h., die Überführung eines detektierten Symbols in die entsprechende Bitsequenz keine Probleme. In Fig. 2 ist ein empfindungsgemäßer Empfänger dargestellt, der einen Demodulator 10, eine Signal-Stör-Abstands-Bestimmungseinrichtung 11 und eine Fehlerratenbestimmungseinrichtung 12 umfaßt. Der Demodulator verarbeitet das empfangene Signal 13, um an seinem Ausgang eine entsprechende Bitsequenz 16 auszugeben. Ein solcher Demodulator 10 enthält einen Entscheider 18, der im Anschluß an die analoge und die optionalen ersten Stufen der digitalen Signalverarbeitung (hier zugesammengefaßt zum Block Signal-Aufbereitung 17) dem aufbereiteten Empfangswert 14 ein oder mehrere Symbole 9 bzw. den entsprechenden Signalwert 15 zuordnet. Die in Fig. 2 dargestellte Signal-Stör-Abstands-Bestimmungseinrichtung 11 enthält zwei verschiedene Bestimmungseinrichtungen 20, 21, um einen Signal-Stör-Abstand 22 zu ermitteln. Dem ermittelten Signal-Stör-Abstand 22 wird in der Fehlerraten-Bestimmungseinrichtung 12 in Abhängigkeit von dem jeweiligen Codierverfahren eine Fehlerrate 23 zugeordnet.

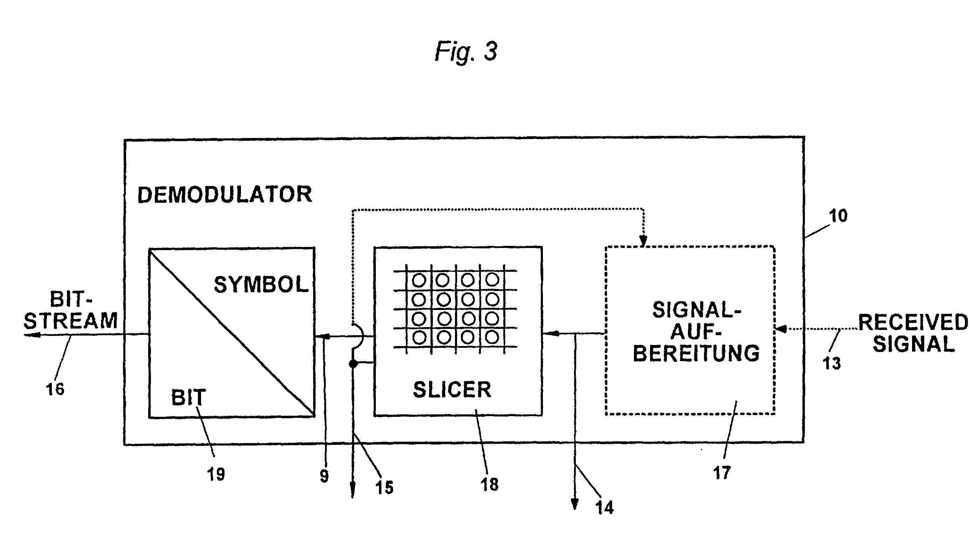

Fig. 3 zeigt den Aufbau eines erfindungsgemäßen Demodulators in dem Empfänger eines digitalen Übertragungssystems. Das von dem Übertragungskanal 4 empfangene Signal 13 wird einer Signal-Aufbereitungs-Einrichtung 17 zugeführt, die beispielsweise die für die digitale Signal-Verarbeitung notwendige Analog-Digital-Umsetzung und/oder eine Entzerrung der übertragenen Signale beinhaltet. Die aufbereiteten Signalwerte 14 werden anschließend dem Entscheider 18 zugeführt, der aufgrund dieses Signalwertes entscheidet, welches oder welche Symbole am wahrscheinlichsten gesendet wurde. Das ausgewählte Symbol oder die ausgewählten Symbole 9 leitet der Entscheider an den Decodierer 19 weiter, der die Symbole 9 in die Bitsequenz 16 umsetzt.

Die Repräsentation der Symbolwerte am Ausgang 15 des in Fig. 2 bzw. Fig. 3 gezeigten Entscheiders 18 ist identisch mit den korrespondierenden, d.h. durch die Modulation im Sender vorgegebenen, Signalwerten des detektierten Symbols. Diese Signalwertfolge 15, die auf den detektierten Symbolen 9 basiert, wird gleichzeitig mit dem detektierten Signalwert 14 an eine Signal-Stör-Abstands-Bestimmungseinrichtung 11 und/oder die vorgeschaltete Signal-Aufbereitungs-Einheit 17 weitergeleitet.

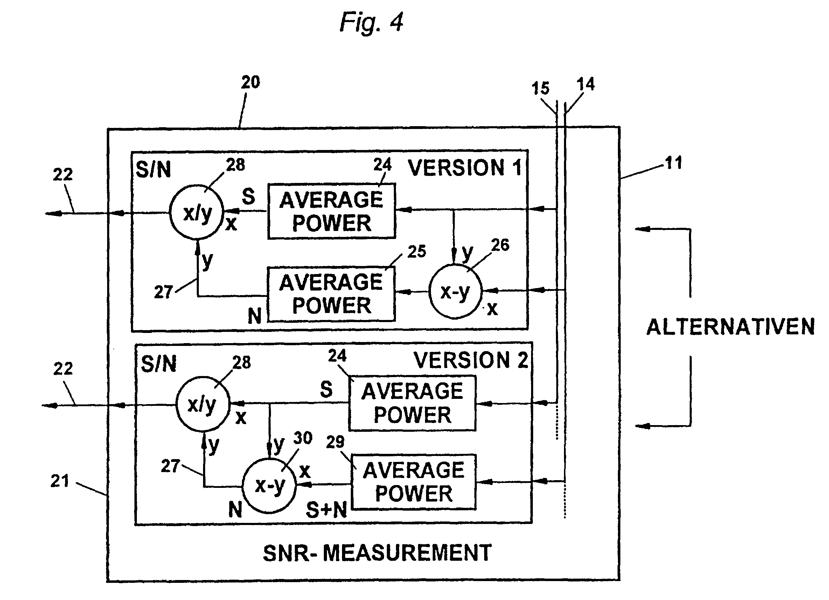

Eine solche Signal-Stör-Abstands-Bestimmungseinrichtung 11 ist in Fig. 4 dargestellt. Die dargestellte Bestimmungseinrichtung enthält zwei Varianten (Version 1, Version 2) zur Berechnung des Signal-Stör-Abstandes 22. In einem erfindungsgemäßen Empfänger ist es ausreichend, den Signal-Stör-Abstand 22 nur auf eine Weise zu bestimmen.

Während die detektierten Signalwerte 14 einen Signalanteil und einen Störanteil enthalten, enthalten die Signalwerte 15, die basierend auf den detektierten Symbolen 9 bestimmt wurden, nur den Signalanteil. In der Signal-Stör-Abstands-Bestimmungseinrichtung 11 wird in beiden Alternativen (Version 1, Version 2) in einer Divisionseinrichtung 28 der Signalanteil S durch den Störanteil N (Noise) geteilt. Zu diesem Zweck müssen die mittlere Signalleistung S und die mittlere Störleistung N jeweils unabhängig voneinander vorliegen. Die mittlere Signalleistung S wird in der Einrichtung 24 zur Ermittlung der mittleren Leistung sowohl gemäß Version 1 als auch gemäß Version 2 aus den Signalwerten 15 bestimmt.

Zur Bestimmung der Störleistung N muß der Signalanteil von dem kombinierten Signal- und Störanteil der Signalwerte 14 abgezogen werden. Dazu werden in der ersten Ausführungsform (Version 1) die Signalwerte des Referenzsignals 15 von den detektierten Signalwerten 14 abgezogen, um die Störsignalwerte zu erhalten. Die Störsignalwerte werden in der Einrichtung 25 zur Ermittlung der mittleren Leistung in die mittlere Leistung N, 27 des Störsignals umgewandelt.

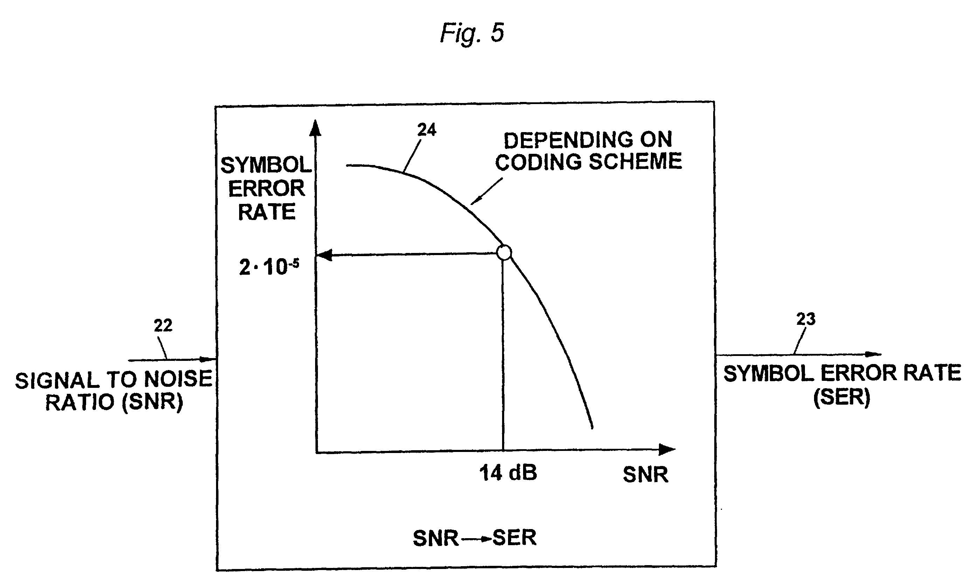

In der zweiten alternativen Ausführungsform, Version 2, wird zunächst in der Einrichtung 29 die mittlere Leistung S + N der empfangenen Signalwerte 14 berechnet. Anschließend wird in der Subtraktionseinrichtung 30 die mittlere Leistung des in der Einrichtung 24 berechneten Signalanteils abgezogen. Die mittleren Leistungen S und N bzw. 27 werden der Divisionseinrichtung 28 zugeleitet, die das Verhältnis der mittleren Leistungen von Signalanteil S und Rauschanteil N, das sogenannte Signal-Stör-Verhältnis (SNR) 22, bildet.
Dieses Signal-Rausch-Verhältnis (SNR; Signal-to-Noise-Ratio) gibt die Qualität der Übertragung von digitaler Information über den Übertragungskanal an. Da man bei digitalen Übertragungskanälen in der Regel nicht wie bei analogen Übertragungssystemen vom Signal-Stör-Abstand bzw. vom Signal-Rausch-Verhältnis SNR spricht, sondern zur Beurteilung der Qualität eines Übertragungssystems allgemein die Bitfehlerrate oder Symbolfehlerrate heranzieht, ist erfindungsgemäß eine Einrichtung 12 vorgesehen, die das ermittelte Signal-Rausch-Verhältnis 22 in die allgemein übliche Symbolfehlerrate (oder auch Bitfehlerrate) 23 umsetzt. Dazu wird der ermittelte SNR-Wert 22 mittels einer bekannten Abbildungsregel 24 in Fig. 5 in die gewünschte Symbolfehlerrate 23 umgewandelt.

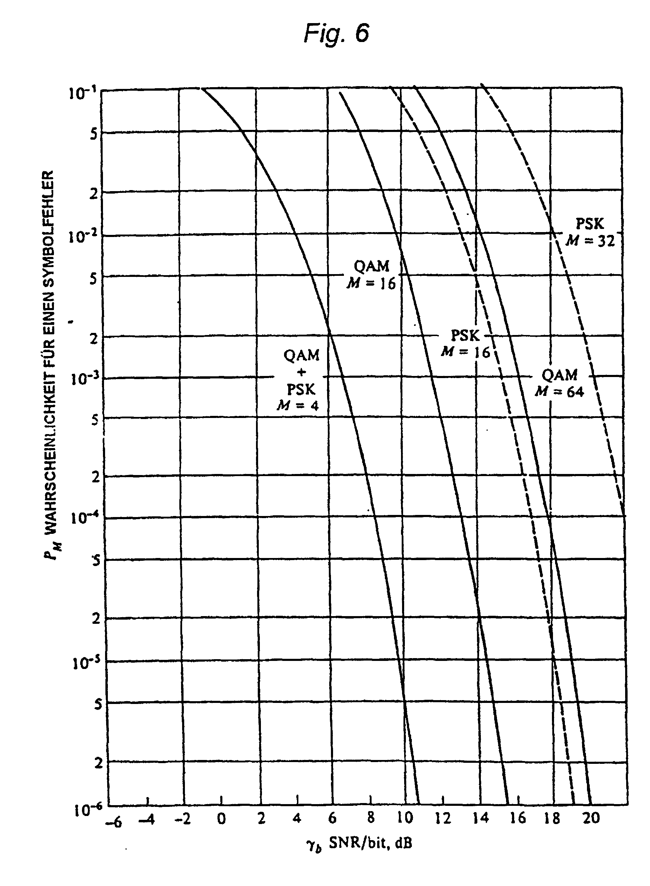

Die jeweils zu verwendende Abbildungsregel ist vom eingesetzten Codierverfahren und Modulationsverfahren abhängig. In Fig. 6 sind einige bekannte Kennlinien zur Umsetzung des Signalrauschverhältnisses SNR in die Wahrscheinlichkeit für einen Symbolfehler P_{M} dargestellt. Jede Kennlinie entspricht dabei einem anderen Codierver-fahren. Dabei bedeutet M die Anzahl der verschiedenen möglichen Signalwerte, QAM und PSK stehen für unterschied-liche Codierverfahren: PSK bedeutet "Phase Shift Keying" (Phasenumtastung) und QAM steht für Quadraturamplitu-denmodulation.

## Patentansprüche

1. Verfahren zur Messung der Übertragungsqualität eines Übertragungskanals (4), über den eine Information übertragen wird,
wobei der Sender folgende Schritte ausführt:
- Darstellen der Information in Form von Symbolen,
- Abbilden der Symbole auf Signalwerte und
- Übertragen der Signalwerte über den Übertragungskanal (4),
wobei der Empfänger folgende Schritte ausführt:
- Empfangen der übertragenen Signalwerte (14),
- Abbilden der empfangenen Signalwerte (21) auf detektierte Symbole (9) und
- Umwandeln der detektierten Symbole (9) in eine detektierte Information,
und wobei das Meßverfahren folgende Schritte umfaßt:
- Bilden eines Referenzsignals (15) durch Abbilden aufeinanderfolgender, detektierter Symbole (9) auf Signalwerte und
- Berechnen der Übertragungsqualität (22,23) des Übertragungskanals (4) basierend auf dem Referenzsignal (15) und den empfangenen Signalwerten (14).

2. Verfahren nach Anspruch 1,
**dadurch gekennzeichnet,**
**daß** der Schritt zum Berechnen der Übertragungsqualität (22) folgende Schritte ausführt:
- Ermittlen eines Störsignalanteils (27) von den empfangenen Signalwerten (14) unter Verwendung des Referenzsignals (15), und
- Berechnen der Übertragungsqualität (22) des Übertragungskanals (4) basierend auf dem Referenzsignal (15) und dem Störsignalanteil (27).

3. Verfahren nach Anspruch 2,
**dadurch gekennzeichnet,**
**daß** zum Berechnen der Übertragungsqualität
- die mittlere Leistung (S,N) des Referenzsignals (15) und des Störsignalanteils ermittelt wird und
- der Signal-Stör-Abstand (22) als Maß für die Übertragungsqualität basierend auf der mittleren Leistung (S) des Referenzsignals (15) und der mittleren Leistung (N) des Störsignalanteils berechnet wird.

4. Verfahren nach Anspruch 2 oder Anspruch 3,
**dadurch gekennzeichnet,**
**daß** die mittlere Leistung (N) des Störsignalanteils durch Ermitteln der mittleren Leistung der Differenz von den empfangenen Signalwerten (14) und dem Referenzsignal (15) berechnet wird.

5. Verfahren nach Anspruch 2 oder Anspruch 3,
**dadurch gekennzeichnet,**
**daß** die mittlere Leistung (N) des Störsignalanteils durch Bilden der Differenz von der mittleren Leistung (S+N) der empfangenen Signalwerte (14) und der mittleren Leistung (S) des Referenzsignals (15) ermittelt wird.

6. Verfahren nach einem der Ansprüche 3 bis 5 ,
**dadurch gekennzeichnet,**
**daß** zur Angabe eines Meßwertes für die Übertragungsqualität dem berechneten Signal-Stör-Abstand (22) eine Symbolfehlerrate (23) oder Bitfehlerrate zugeordnet wird.

7. Übertragungssystem zur Übertragung von digitalen Informationen,
mit einem ein Sender, der enthält:
- eine Codiereinrichtung zur Darstellung der digitalen Information in Form von Symbolen und
- einen Modulator zur Abbildung der Symbole auf Signalwerte zur Übertragung über einen Übertragungskanal (4),
und mit einem Empfänger (12), der enthält:
- einen Demodulator (20) zur Abbildung empfangener Signalwerte (14) auf detektierte Symbole (9) und
- eine Decodiereinrichtung (24) zur Darstellung der detektierten Symbole (9) als detektierte digitale Information,
und mit einer Vorrichtung zur Messung der Übertragungsqualität eines Übertragungskanals (4) für die Übertragung digitaler Information, wobei die genannte Vorrichtung enthält:
- einen Modulator zur Erzeugung eines Referenzsignals (15), indem aufeinanderfolgend detektierten Symbolen (9) Signalwerte zugeordnet werden und
- eine Übertragungqualität-Bestimmungseinrichtung (11) zur Bestimmung der Übertragungsqualität (22,23) des Übertragungskanals (4) basierend auf dem Referenzsignal (15) und den empfangenen Signalwerten (14).

8. Übertragungssystem nach Anspruch 7,
**dadurch gekennzeichnet,**
**daß** die Vorrichtung außerdem umfaßt:
- eine Einrichtung (24) zur Ermittlung der mittleren Leistung (S) des Referenzsignals (15),
- eine Einrichtung (29) zur Ermittlung der mittleren Leistung (S+N) der empfangenen Signalwerte (14),
- einen Subtrahierer (30) zur Subtraktion der mittleren Leistung (S) des Referenzsignals (15) von der mittleren Leistung (S+N) der empfangenen Signalwerte (14) und zur Erzeugung der mittleren Leistung (N) eines Störsignalanteils und
- einen Dividierer (28) zur Berechnung des Signal-Stör-Abstands (22) als Maß für die Übertragungsqualität durch Division der mittleren Leistung (S) des Referenzsignal (15) durch die mittlere Leistung (N) des Störsignalanteils.

9. Übertragungssystem nach Anspruch 7,
**dadurch gekennzeichnet,**
**daß** die Vorrichtung außerdem umfaßt:
- eine Einrichtung (24) zur Ermittlung der mittleren Leistung (S) des Referenzsignals (15),
- einen Subtrahierer (26) zur Subtraktion des Referenzsignals (15) von den empfangenen Signalwerten (14) und zur Erzeugung eines Störsignalanteils,
- eine Einrichtung (25) zur Ermittlung der mittleren Leistung (N) des Störsignalanteils und
- einen Dividierer (28) zur Berechnung des Signal-Stör-Abstands (22) als Maß für die Übertragungsqualität durch Division der mittleren Leistung (S) des Referenzsignals (15) durch die mittlere Leistung (N) des Störsignalanteils.

10. Übertragungssystem nach einem der Ansprüche 7 bis 9,
**dadurch gekennzeichnet,**
**daß** die Vorrichtung außerdem eine Fehlerraten-Bestimmungseinrichtung (12) umfaßt, die einem berechneten Signal-Stör-Abstand (22) eine Symbolfehlerrate (23) oder Bitfehlerrate zuordnet.

## Claims

1. Method for measuring the transmission quality of a transmission channel (4) via which information is transmitted,
with the transmitter carrying out the following steps:
- representation of the information in the form of symbols,
- mapping of the symbols onto signal values, and
- transmission of the signal values via the transmission channel (4),
with the receiver carrying out the following steps:
- reception of the transmitted signal values (14),
- mapping of the received signal values (21) onto detected symbols (9), and
- conversion of the detected symbols (9) to detected information,
and with the measurement method comprising the following steps:
- formation of a reference signal (15) by mapping successive detected symbols (9) onto signal values, and
- calculation of the transmission quality (22, 23) of the transmission channel (4) on the basis of the reference signal (15) and of the received signal values (14).

2. Method according to Claim 1,
**characterized**
**in that** the step for calculating the transmission quality (22) carries out the following steps:
- determination of an interference signal component (27) from the received signal values (14) using the reference signal (15), and
- calculation of the transmission quality (22) of the transmission channel (4) on the basis of the reference signal (15) and the interference signal component (27).

3. Method according to Claim 2,
**characterized**
**in that**, in order to calculate the transmission quality:
- the mean power level (S, N) of the reference signal (15) and of the interference signal component is determined, and
- the signal-to-noise ratio (22) is calculated as a measure of the transmission quality on the basis of the mean power level (S) of the reference signal (15) and the mean power level (N) of the interference signal component.

4. Method according to Claim 2 or Claim 3,
**characterized**
**in that** the mean power level (N) of the interference signal component is calculated by determining the mean power level of the difference between the received signal values (14) and the reference signal (15).

5. Method according to Claim 2 or Claim 3,
**characterized**
**in that** the mean power level (N) of the interference signal component is determined by forming the difference between the mean power level (S + N) of the received signal values (14) and the mean power level (S) of the reference signal (15).

6. Method according to one of Claims 3 to 5,
**characterized**
**in that** a symbol error rate (23) or bit error rate is associated with the calculated signal-to-noise ratio (22) in order to indicate a measurement value for the transmission quality.

7. Transmission system for transmitting digital information,
having a transmitter which contains:
- a coding device for representing the digital information in the form of symbols, and
- a modulator for mapping the symbols onto signal values for transmission via a transmission channel (4),
and having a receiver (12) which contains:
- a demodulator (20) for mapping received signal values (14) onto detected symbols (9) and
- a decoding device (24) for representing the detected symbols (9) as detected digital information,
and having an apparatus for measuring the transmission quality of a transmission channel (4) for the transmission of digital information, with the said apparatus containing:
- a modulator for producing a reference signal (15) by associating signal values with successively detected symbols (9), and
- a transmission-quality determining device (11) for determining the transmission quality (22, 23) of the transmission channel (4) on the basis of the reference signal (15) and of the received signal values (14).

8. Transmission system according to Claim 7,
**characterized**
**in that** the apparatus also comprises:
- a device (24) for determining the mean power level (S) of the reference signal (15),
- a device (29) for determining the mean power level (S + N) of the received signal values (14),
- a subtractor 13) for subtracting the mean power level (S) of the reference signal (15) from the mean power level (S + N) of the received signal values (14) and for producing the mean power level (N) of an interference signal component, and
- a divider (28) for calculating the signal-to-noise ratio (22) as a measure of the transmission quality by dividing the mean power level (S) of the reference signal (15) by the mean power level (N) of the interference signal component.

9. Transmission system according to Claim 7,
**characterized**
**in that** the apparatus also comprises:
- a device (24) for determining the mean power level (S) of the reference signal (15),
- a subtractor (26) for subtracting the reference signal (15) from the received signal values (14) and for producing an interference signal component,
- a device (25) for determining the mean power level (N) of the interference signal component, and
- a divider (28) for calculating the signal-to-noise ratio (22) as a measure of the transmission quality by dividing the mean power level (S) of the reference signal (15) by the mean power level (N) of the interference signal component.

10. Transmission system according to one of Claims 7 to 9,
**characterized**
**in that** the apparatus also comprises an error-rate determining device (12), which associates a symbol error rate (23) or a bit error rate with a calculated signal-to-noise ratio (22).

## Revendications

1. Procédé de mesure de la qualité de transfert d'un canal de transmission (4) servant à la transmission d'une information,
l'émetteur exécutant les étapes suivantes:
- représentation de l'information sous forme de symboles,
- projection des symboles sur des valeurs de signaux et
- transmission des valeurs de signaux via le canal de transmission (4),
le récepteur exécutant les étapes suivantes:
- réception des valeurs de signaux transmises (14),
- projection des valeurs de signaux reçues (21) sur des symboles détectés (9) et
- conversion des symboles détectés (9) en une information détectée,
et le procédé de mesure comprenant les étapes suivantes:
- formation d'un signal de référence (15) par projection de symboles (9) détectés successifs sur des valeurs de signaux et
- calcul de la qualité de transfert (22, 23) du canal de transmission (4) sur la base du signal de référence (15) et des valeurs de signaux reçues (14).

2. Procédé selon la revendication 1, **caractérisé en ce que** l'étape de calcul de la qualité de transfert (22) exécute les étapes suivantes:
- détermination d'une fraction de signal brouilleur (27) des valeurs de signaux reçues (14) moyennant l'utilisation du signal de référence (15) et
- calcul de la qualité de transfert (22) du canal de transmission (4) sur la base du signal de référence (15) et de la fraction de signal brouilleur (27).

3. Procédé selon la revendication 2, **caractérisé en ce que**, pour le calcul de la qualité de transfert,
- la puissance moyenne (S, N) du signal de référence (15) et de la fraction de signal brouilleur est déterminée et
- le rapport signal / bruit (22) est calculé comme mesure de la qualité de transfert sur la base de la puissance moyenne (S) du signal de référence (15) et sur la base de la puissance moyenne (N) de la fraction de signal brouilleur.

4. Procédé selon la revendication 2 ou la revendication 3, **caractérisé en ce que** la puissance moyenne (N) de la fraction de signal brouilleur est calculée par la détermination de la puissance moyenne de la différence entre les valeurs de signaux reçues (14) et le signal de référence (15).

5. Procédé selon la revendication 2 ou la revendication 3, **caractérisé en ce que** la puissance moyenne (N) de la fraction de signal brouilleur est déterminée par formation de la différence entre la puissance moyenne (S + N) des valeurs de signaux reçues (14) et la puissance moyenne (S) du signal de référence (15).

6. Procédé selon l'une des revendications 3 à 5, **caractérisé en ce que**, pour l'indication d'une valeur de mesure de la qualité de transfert, un taux d'erreur de symbole (23) ou taux d'erreur de bit est affecté au rapport signal / bruit (22) calculé.

7. Système de transmission pour la transmission d'informations numériques
avec un émetteur comprenant:
- un dispositif de codage pour la représentation de l'information numérique sous la forme de symboles et
- un modulateur pour la projection des symboles sur des valeurs de signaux pour transmission via un canal de transmission (4),
avec un récepteur (12) comprenant:
- un démodulateur (20) pour la projection de valeurs de signaux reçues (14) sur des symboles détectés (9) et
- un dispositif de décodage (24) pour la représentation des symboles détectés (9) sous la forme d'information numérique détectée,
et avec un dispositif de mesure de la qualité de transfert d'un canal de transmission (4) pour la transmission d'information numérique, ledit dispositif comprenant:
- un modulateur pour la génération d'un signal de référence (15) par affectation de valeurs de signaux à des symboles (9) détectés successivement et
- un dispositif (11) de détermination de la qualité de transfert pour la détermination de la qualité de transfert (22, 23) du canal de transmission (4) sur la base du signal de référence (15) et des valeurs de signaux reçues (14).

8. Système de transmission selon la revendication 7, **caractérisé en ce que** le dispositif comprend en outre:
- un dispositif (24) de détermination de la puissance moyenne (S) du signal de référence (15),
- un dispositif (29) de détermination de la puissance moyenne (S + N) des valeurs de signaux reçues (14),
- un soustracteur (30) pour la soustraction de la puissance moyenne (S) du signal de référence (15) de la puissance moyenne (S + N) des valeurs de signaux reçues (14) et pour la génération de la puissance moyenne (N) d'une fraction de signal brouilleur et
- un diviseur (28) pour le calcul du rapport signal / bruit (22) en tant que mesure de la qualité de transfert par division de la puissance moyenne (S) du signal de référence (15) par la puissance moyenne (N) de la fraction de signal brouilleur.

9. Système de transmission selon la revendication 7, **caractérisé en ce que** le dispositif comprend en outre:
- un dispositif (24) de détermination de la puissance moyenne (S) du signal de référence (15),
- un soustracteur (26) pour la soustraction du signal de référence (15) des valeurs de signaux reçues (14) et pour la génération d'une fraction de signal brouilleur,
- un dispositif (25) de détermination de la puissance moyenne (N) de la fraction du signal brouilleur et
- un diviseur (28) pour le calcul du rapport signal / bruit (22) en tant que mesure de la qualité de transfert par division de la puissance moyenne (S) du signal de référence (15) par la puissance moyenne (N) de la fraction de signal brouilleur.

10. Système de transmission selon l'une des revendications 7 à 9, **caractérisé en ce que** le dispositif comprend en outre un dispositif (12) de détermination de taux d'erreur, lequel affecte un taux d'erreur de symbole (23) ou taux d'erreur de bit à un rapport signal / bruit (22) calculé.
